# FASCICULE DE BREVET EUROPEEN

(11) **EP 2 771 552 B1**
(45) Date de publication et mention de la délivrance du brevet: **01.03.2017**
(21) Numéro de dépôt: 12775792.0
(22) Date de dépôt: 28.09.2012
(51) Int. Cl.: F01N 13/18, B60K 13/04, F01N 3/20

(54) **SYSTEME DE FIXATION D'UNE CARTOUCHE DE REDUCTEUR A UN SUPPORT**
SYSTEM ZUR BEFESTIGUNG EINER REDUZIERERKARTUSCHE AN EINEM HALTER
SYSTEM FOR ATTACHING A REDUCER CARTRIDGE TO A HOLDER

(30) Priorité: 28.10.2011 FR 1159824
(43) Date de publication de la demande: 03.09.2014
(73) Titulaire: Peugeot Citroën Automobiles SA, 78140 Vélizy Villacoublay (FR)
(72) Inventeur: GRISE, Clement, F-92270 Bois Colombes (FR); WIDEMANN, Stéphane, F-92800 Puteaux (FR)
(74) Mandataire: Renous Chan, Véronique
(86) Numéro de dépôt international: PCT/FR2012/052208
(87) Numéro de publication internationale: WO 2013/060957

(56) Documents cités:
- EP-A2- 1 199 449
- FR-A1- 2 957 270
- US-A1- 2002 134 074
- US-A1- 2008 042 028
- US-A1- 2010 219 220
- US-A1- 2011 197 423

## Description

L'invention concerne un système de fixation, à un support adapté à être fixé à un véhicule automobile, d'une cartouche de réducteur destiné à être injecté dans la conduite d'échappement du véhicule.

Afin de diminuer le taux d'oxydes d'azote émis par les véhicules automobiles, la conduite d'échappement de ces derniers est munie d'un système de réduction des oxydes d'azote comprenant un dispositif catalytique de réduction et, en amont de ce dernier, un injecteur de réducteur (tel que de l'ammoniac) qui est destiné à réduire les oxydes d'azote dans le dispositif catalytique de réduction.

Dans certains cas, le réducteur employé est stocké dans au moins une cartouche d'un système de stockage, le système de stockage comprenant également un support auquel est fixée la cartouche et qui est adapté à être fixé à une caisse du véhicule. Un tel système de stockage est utilisé notamment quand le réducteur employé est de l'ammoniac, le réducteur étant stocké sous forme d'un sel solide et libéré par chauffage (par l'intermédiaire d'un dispositif de chauffe formé typiquement par une résistance électrique). Classiquement, un système de stockage comprend le support et différents éléments portés par le support, notamment, les cartouches, un capot définissant, avec le support, un logement pour les cartouches, le dispositif de chauffe, un réseau de conduites permettant de relier les cartouches à l'injecteur de réducteur qui est situé dans une conduite d'échappement du véhicule, une unité de dosage de réducteur envoyé dans le réseau de conduites, un calculateur, des liaisons électriques entre les différents composants électriques...

Quand il est nécessaire de remplacer les cartouches vides, il est actuellement nécessaire de séparer le système de stockage (d'une masse généralement comprise entre 15 et 17 kg) de la caisse. Le poids et l'emplacement sous la caisse du système de stockage entraînent un effort physique important pour la personne effectuant l'opération.

L'invention vise à résoudre un ou plusieurs de ces inconvénients.

On connait par ailleurs du document US2002134074A un dispositif de fixation d'une cartouche de réducteur par translation.

L'invention porte ainsi sur un système de fixation d'une cartouche de réducteur à un support adapté à être fixé à un véhicule automobile, caractérisé en ce qu'il comprend un système de maintien configuré de façon à définir une position de maintien de la cartouche dans laquelle cette dernière est située en un emplacement de maintien, et à stabiliser la cartouche dans cette position après rotation de cette dernière depuis une position angulaire de mise en place dans laquelle le système de maintien permet le rapprochement de la cartouche d'une paroi de fond du support jusqu'à la position de maintien, jusqu'à une position angulaire de stabilisation dans laquelle le système de maintien empêche l'éloignement de la cartouche de la paroi de fond.

De ce fait l'opérateur peut aisément déposer uniquement la cartouche vide et la remplacer par une autre cartouche pleine dont la masse est typiquement comprise entre 5 et 6 kg. La libération ou l'assujettissement physique de la cartouche du support par une simple rotation de la cartouche sur elle-même est d'une manipulation particulièrement aisée.

Selon mode avantageux, le système de fixation comprend un système de verrouillage adapté à immobiliser la cartouche dans sa position angulaire de stabilisation par la fixation au support d'un capot qui est adapté à enfermer la cartouche dans un logement délimité par le support et le capot.

Ce mode prévient toute rotation involontaire de la cartouche jusqu'à sa position angulaire de mise en place due aux mouvements du véhicule, et donc prévient le risque d'une séparation inopinée de la cartouche lors de l'enlèvement du capot.

Selon un mode de réalisation encore plus avantageux, le système de fixation comprend un système de décollage adapté à déplacer la cartouche en position angulaire de stabilisation de sa position de maintien à une position d'usage dans laquelle la cartouche est plus proche de la paroi de fond qu'elle ne l'est en position de maintien.

Ce mode de réalisation permet de limiter les efforts mécaniques supportés par le système de maintien aux temps nécessaire pour effectuer les opérations de remplacement.

Selon un mode préférentiel, en position d'usage, la cartouche est en contact avec la paroi de fond.

De ce fait, la transmission de chaleur (permettant la libération du réducteur) entre un dispositif de chauffage (porté par le support) et la cartouche est optimisée.

Selon un mode de réalisation particulier, le système de maintien comprend, d'une part, une rainure réalisée dans une paroi de forme cylindrique portée par la cartouche, et, d'autre part, un ergot faisant saillie, dans le sens de l'axe de rotation de la cartouche en position de maintien, d'un bras qui est porté par le support, la rainure ayant, dans la direction saillante de l'ergot, une hauteur de passage permettant le passage du bras et de l'ergot dans un secteur angulaire correspondant à la position angulaire de mise en place de la cartouche et ne permettant que le passage du bras dans les autres secteurs angulaires.

Selon un autre mode de réalisation particulier, la paroi de forme cylindrique est une paroi cylindrique de protection adaptée à protéger un organe de connexion de la cartouche disposé à une première extrémité longitudinale de cette dernière et permettant la connexion de la cartouche à un réseau de conduite adapté à canaliser le réducteur.

Selon un autre mode de réalisation, le système de maintien comprend, d'une part, une seconde paroi de forme cylindrique portée par la cartouche à une deuxième extrémité longitudinale opposée à la première extrémité longitudinale, et, d'autre part, un doigt d'appui porté par le support saillant, orienté dans le sens de l'axe de rotation de la cartouche en position de maintien, et adapté à supporter la seconde paroi de la cartouche quand celle-ci est en position de maintien.

Selon un autre mode de réalisation, le système de verrouillage comprend d'une part, un orifice réalisé dans une surface cylindrique de la cartouche, et, d'autre part, un ergot d'immobilisation saillant du capot et adapté à pénétrer dans l'orifice quand la cartouche est dans sa position angulaire de stabilisation.

Selon un autre mode de réalisation, l'orifice est réalisé dans la surface cylindrique de protection.

Selon un autre mode de réalisation, le capot comprend une surface de contact adaptée, quand le capot est rapproché du support pour y être fixé, à venir en contact contre la cartouche et à l'entraîner de sa position de mise en place à sa position d'usage.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective éclatée d'un système de stockage de réducteur comprenant un système de fixation conforme à la présente invention ;
- la figure 2 est une vue en coupe longitudinale d'une cartouche employant un système de fixation conforme à la présente invention ;
- la figure 3 est une vue en perspective d'une paroi cylindrique de protection d'un organe de connexion d'une cartouche, cette paroi formant une partie du système de maintien du système de fixation conforme à la présente invention ;

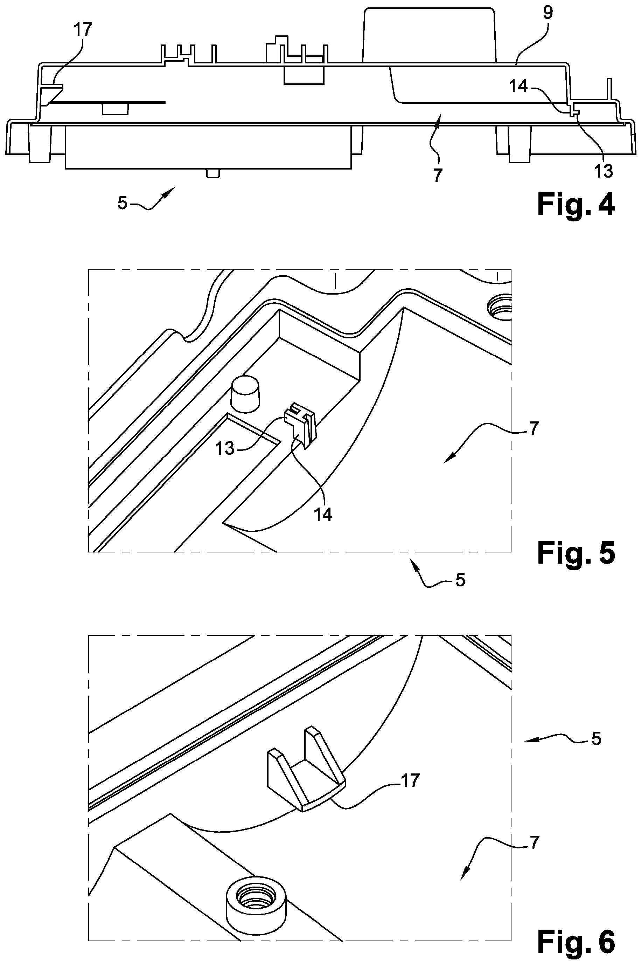

- la figure 4 est une vue en coupe longitudinale d'un support employant un système de fixation conforme à la présente invention ;
- la figure 5 est une vue en perspective, de dessous, d'un ergot saillant d'un bras porté par le support, cet ensemble formé par l'ergot et le bras formant une partie du système de maintien du système de fixation conforme à la présente invention ;
- la figure 6 est une vue en perspective, de dessous, d'un doigt d'appui porté par le support et formant une partie du système de maintien du système fixation conforme à la présente invention ;
- la figure 7 est une vue en coupe longitudinale du support de la figure 4 et d'une cartouche de la figure 2 ayant deux positions : une première position dans laquelle la cartouche est inclinée et où seule une paroi de forme cylindrique de la cartouche située à l'extrémité longitudinale opposée à celle portant la paroi cylindrique de protection de la figure 3 est engagée avec le doigt d'appui de la figure 6 ; et une seconde position dans laquelle la cartouche est dans sa position de maintien, en position angulaire de mise en place ;
- la figure 8 est une vue en perspective de dessous, illustrant la coopération entre l'ergot de la figure 5 et la rainure réalisée dans la paroi cylindrique de protection de la figure 3 quand la cartouche est dans sa position de maintien, en position angulaire de mise en place ;
- la figure 9 est une vue en coupe longitudinale similaire à la figure 7 où la cartouche est dans sa position de maintien, en position angulaire de stabilisation ;
- la figure 10 est une vue en perspective de dessous, illustrant la coopération entre l'ergot et la rainure quand la cartouche est dans sa position de maintien, en position angulaire de stabilisation ;
- la figure 11 est une vue en perspective longitudinale du support et de la cartouche dans sa position de maintien, en position angulaire de stabilisation, connectée à un réseau de conduites permettant de relier les cartouches à un injecteur de réducteur ;

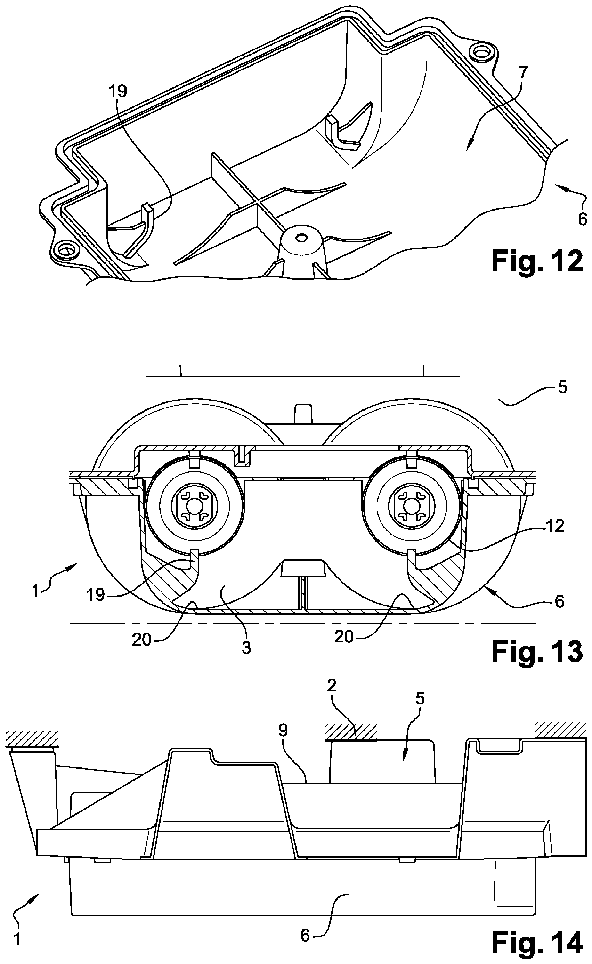

- la figure 12 est une vue en perspective partielle d'un capot définissant avec le support un logement pour la cartouche, et comportant deux ergots d'immobilisation formant une partie du système de verrouillage du système fixation conforme à la présente invention ;
- la figure 13 est une vue en coupe perpendiculaire à l'axe longitudinal, du système de stockage de la figure 1, le capot étant fixé au support et les cartouches étant verrouillées par le capot en position angulaire de stabilisation, dans leur position d'usage ; et
- la figure 14 est une vue en perspective longitudinale du système de stockage dans sa configuration d'usage.

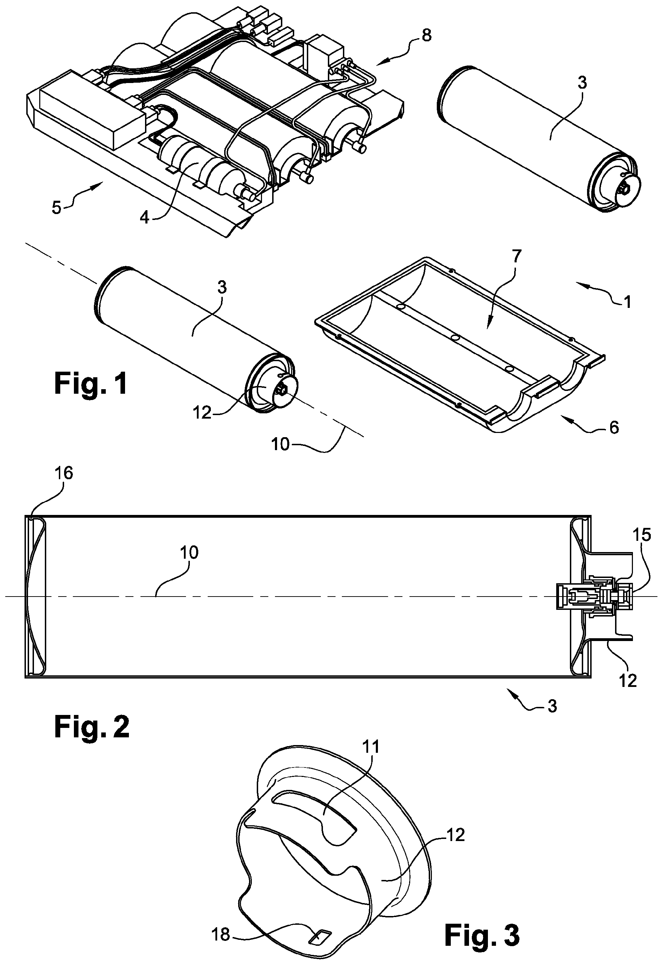

La figure 1 représente un système de stockage d'un réducteur, le réducteur étant destiné à être introduit dans une conduite d'échappement d'un véhicule automobile afin de permettre une réduction catalytique des oxydes d'azote émis par un moteur à combustion du véhicule. Le système de stockage 1 est adapté à être fixé au véhicule, typiquement à une caisse 2 du véhicule).

Le système de stockage 1 comprend au moins une cartouche 3, 4 qui contient le réducteur (en l'occurrence, le système de stockage comprend trois cartouches 3, 4 de deux types : deux cartouches principales 3 et une cartouche auxiliaire 4). Le système de stockage 1 comprend également un support 5 qui est adapté à être fixé à la caisse 2 du véhicule et qui supporte les cartouches 3, 4 et d'autres composants du système de stockage1. Ces autres composants comprennent un capot 6 qui définit, avec le support 5, un logement 7 pour les cartouches principales 3 quand il est fixé au support 5, un dispositif de chauffe permettant, dans le présent exemple, de libérer de l'ammoniac NH₃ qui était stocké dans la cartouche sous forme de sel solide, un réseau de conduites 8 qui permet de relier les cartouches 3, 4 à un injecteur de réducteur situé dans la conduite d'échappement du véhicule, une unité de dosage de réducteur envoyé dans le réseau de conduites 8, un calculateur, des liaisons électriques entre les différents composants électriques...

Conformément à la présente invention, dans le présent mode de réalisation, le système de stockage 1 comprend, pour chaque cartouche principale 3, un système de fixation qui permet de fixer la cartouche principale 3 correspondante au support 5.

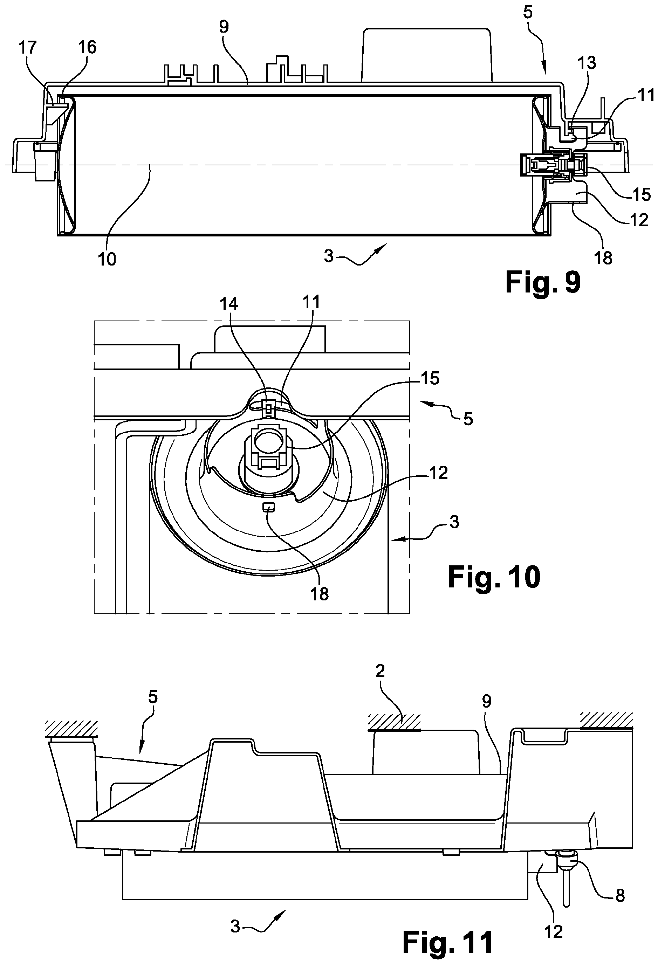

Le système de fixation comprend un système de maintien qui est configuré de façon à définir une position de maintien de la cartouche principale 3. Quand une cartouche principale 3 est dans sa position de maintien, elle occupe un emplacement de maintien (tel qu'illustré, par exemple, à la figure 9). Le système de maintien est par ailleurs configuré de façon à stabiliser la cartouche principale 3 correspondante dans cette position de maintien après rotation de cette cartouche 3 sur elle-même depuis une position angulaire de mise en place jusqu'à une position angulaire de stabilisation. Le système de maintien est tel qu'en position angulaire de mise en place, la cartouche 3 peut être rapprochée ou éloignée d'une paroi de fond 9 du support 5, et qu'en position angulaire de stabilisation, la cartouche 3 ne peut pas être éloignée de cette paroi de fond 9.

Chaque cartouche principale 3 est, dans le présent mode de réalisation, de forme cylindrique et présente un axe longitudinal 10 de symétrie autour duquel est pivotée la cartouche 3 pour passer de l'une à l'autre des deux positions angulaires de mise en place et de stabilisation.

De façon plus précise, chaque système de maintien comprend, d'une part, une rainure 11 qui est réalisée dans une paroi de forme cylindrique 12 portée par la cartouche 3, et, d'autre part, un ergot 13 qui est saillant, dans le sens de l'axe longitudinal 10 de la cartouche en position de maintien, d'un bras 14 qui est lui-même porté par le support 3.

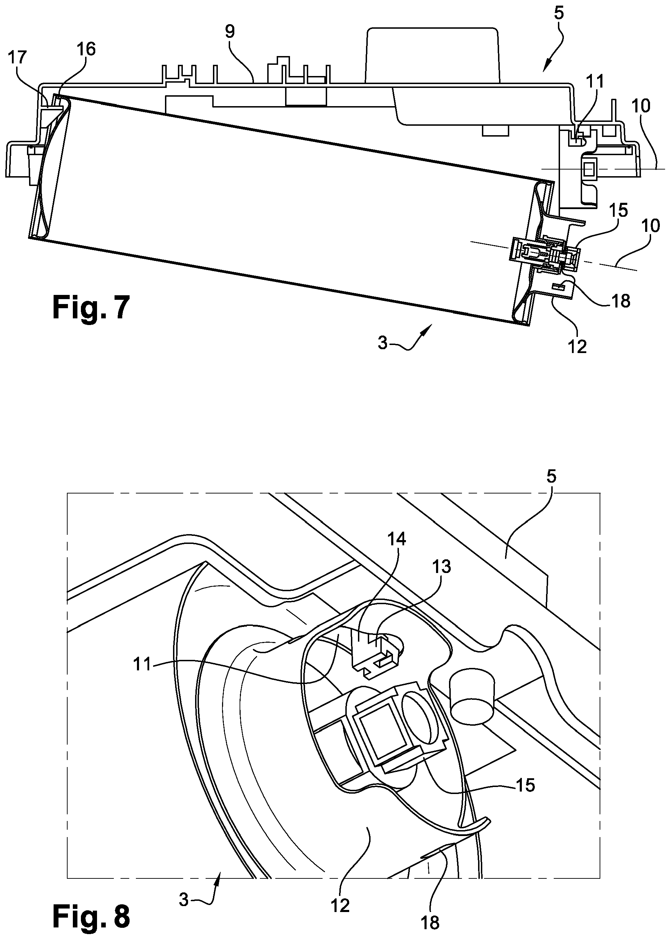

De façon à permettre le maintien ou non de la cartouche 3 en position de maintien selon que sa position angulaire est soit sa position angulaire de stabilisation, soit sa position angulaire de mise en place, la rainure 11 a, dans la direction saillante de l'ergot 13 (c'est-à-dire, dans la direction de l'axe longitudinal 10 de la cartouche 3), une hauteur de passage permettant le passage du bras 14 et de l'ergot 13 dans un secteur angulaire correspondant à la position angulaire de mise en place de la cartouche (comme illustré à la figure 8) et ne permettant que le passage du bras 14 dans les autres secteurs angulaires.

Dans le présent mode de réalisation, la paroi de forme cylindrique 12 est une paroi cylindrique de protection 12 qui permet de protéger un organe de connexion 15 de la cartouche 3. Cet organe de connexion 15 est disposé à une première extrémité longitudinale de la cartouche (ici, dans l'axe longitudinal 10 de la cartouche 3) et permet de connecter la cartouche 3 au réseau de conduites 8.

Chaque système de maintien comprend également, d'une part, une seconde paroi de forme cylindrique 16 qui est portée par la cartouche 3, et, d'autre part, un doigt d'appui 17 qui est porté par le support 5 et est orienté dans le sens de l'axe longitudinal 10 de la cartouche 3 en position de maintien. La seconde paroi de forme cylindrique 16 est située à une deuxième extrémité longitudinale de la cartouche 3, opposée à la première extrémité longitudinale où se situe la paroi cylindrique de protection 12. Cette seconde paroi de forme cylindrique 16 est ici la bordure périphérique de la cartouche 3 au niveau de la deuxième extrémité longitudinale. Le doigt d'appui 17 est, quat à lui, adapté à supporter cette seconde paroi 16 quand la cartouche 3 est en position de maintien. Ce couple seconde paroi cylindrique 16 / doigt d'appui 17 permet une mise en place aisée de la cartouche par insertion de la cartouche 3, comme illustré à la figure 7.

Chaque système de fixation comprend également un système de verrouillage qui est adapté à immobiliser la cartouche 3 correspondante dans sa position angulaire de stabilisation. Cette immobilisation est réalisée lors du rapprochement et de la fixation du capot 6 au support 5.

Dans le présent mode de réalisation, le système de verrouillage comprend d'une part, un orifice 18 qui est réalisé dans une surface cylindrique de la cartouche 3, et, d'autre part, un ergot d'immobilisation 19 qui est saillant du capot 6 et qui est adapté à pénétrer dans l'orifice 18 quand la cartouche 3 est dans sa position angulaire de stabilisation. En l'occurrence, l'orifice 18 est réalisé dans la surface cylindrique de protection 12.

Chaque système de fixation comprend par ailleurs un système de décollage qui est adapté à déplacer la cartouche 3 en position angulaire de stabilisation de sa position de maintien à une position d'usage dans laquelle la cartouche est plus proche de la paroi de fond 9 du support 5 qu'elle ne l'est en position de maintien. De ce fait, le système de maintien n'est sollicité qu'entre le moment où la cartouche est pivotée sur elle-même autour de son axe, et celui où le capot 6 est fixé au support 6.

Le système de décollage comprend, dans le présent mode de réalisation, une surface de contact 20 qui est portée par le capot 6 et qui est adaptée, quand le capot 6 est rapproché du support 5 pour y être fixé, à venir en contact contre la cartouche 3 et à l'entraîner de sa position de mise en place à sa position d'usage.

Ici, en position d'usage, la cartouche 3 est en contact avec la paroi de fond 9. De ce fait, en usage, la transmission de chaleur nécessaire pour la libération du réducteur 3 est optimisée.

Le système de verrouillage est par ailleurs conformé de sorte que (ici, la longueur de chaque ergot d'immobilisation 19 est telle que) la cartouche 3 est immobilisée dans sa position stabilisée tant en position de maintien qu'en position d'usage. De ce fait, il n'y a pas de risque que les mouvements du véhicule n'entraînent la cartouche dans sa position angulaire de mise en place, ce qui entraînerait sa chute lors de l'enlèvement du capot 6.

La mise en place d'une cartouche principale 3 du système de stockage 1 se fait selon le procédé suivant :
- Dans un premier temps, la cartouche 3 est introduite inclinée dans la portion de son logement 7 délimitée par le support 5 de façon à engager la seconde paroi cylindrique 16 avec le doigt d'appui 17 (cf. figure 7) ;
- Dans un second temps, la cartouche 3 est à la fois relevée en étant pivotée autour du doigt d'appui 17 et tournée autour de son axe longitudinal 10 jusqu'à sa position angulaire de mise en place de sorte que l'ergot 13 traverse la rainure 11 quand la cartouche 3 atteint sa position de maintien (cf. figures 7 et 8) ;
- Dans un troisième temps, la cartouche 3 qui est en position de maintien, est tournée sur elle-même atour de son axe jusqu'à sa position angulaire de stabilisation (cf. figures 9 et 10) ;
- Dans un quatrième temps, la cartouche 3 est connectée au réseau de conduites 8 ; et
- Dans un cinquième temps, le capot 6 est fixé au support 5, ce qui entraîne à la fois l'immobilisation de la cartouche dans sa position angulaire de stabilisation et son déplacement de sa position de maintien à sa position d'usage.

Le dépôt d'une cartouche 3 se fait selon le procédé inverse.

Dans le présent mode de réalisation, le système de stockage est orienté de sorte que les cartouches en position d'usage soient orientées horizontalement. Elles pourraient avoir toute autre orientation, dont la position verticale.

## Revendications

1. Système de fixation d'une cartouche (3) de réducteur, le réducteur étant stocké sous forme d'un sel solide, à un support (5) adapté à être fixé à un véhicule automobile, **caractérisé en ce qu'**il comprend un système de maintien configuré de façon à définir une position de maintien de la cartouche (3) dans laquelle cette dernière est située en un emplacement de maintien, et à stabiliser la cartouche (3) dans cette position après rotation de cette dernière sur elle-même autour de son axe longitudinal depuis une position angulaire de mise en place dans laquelle le système de maintien permet le rapprochement de la cartouche (3) d'une paroi de fond (9) du support (5) jusqu'à la position de maintien, jusqu'à une position angulaire de stabilisation dans laquelle le système de maintien empêche l'éloignement de la cartouche (3) de la paroi de fond (9).

2. Système de fixation selon la revendication 1, **caractérisé en ce qu'**il comprend un système de verrouillage adapté à immobiliser la cartouche (3) dans sa position angulaire de stabilisation par la fixation au support (5) d'un capot (6) qui est adapté à enfermer la cartouche (3) dans un logement délimité par le support (5) et le capot (6).

3. Système de fixation selon l'une des revendications 1 et 2, **caractérisé en ce qu'**il comprend un système de décollage adapté à déplacer la cartouche (3) en position angulaire de stabilisation de sa position de maintien à une position d'usage dans laquelle la cartouche (3) est plus proche de la paroi de fond (9) qu'elle ne l'est en position de maintien.

4. Système de fixation selon la revendication 3, **caractérisé en ce qu'**en position d'usage la cartouche (3) est en contact avec la paroi de fond (9).

5. Système de fixation selon l'une des revendications 1 à 4, **caractérisé en ce que** le système de maintien comprend, d'une part, une rainure (11) réalisée dans une paroi (12) de forme cylindrique portée par la cartouche (3), et, d'autre part, un ergot (13) saillant, dans le sens de l'axe (10) de rotation de la cartouche (3) en position de maintien, d'un bras (14) qui est porté par le support (5), la rainure (11) ayant, dans la direction saillante de l'ergot (13), une hauteur de passage permettant le passage du bras (14) et de l'ergot (13) dans un secteur angulaire correspondant à la position angulaire de mise en place de la cartouche (3) et ne permettant que le passage du bras (14) dans les autres secteurs angulaires.

6. Système de fixation selon la revendication 5, **caractérisé en ce que** la paroi (12) de forme cylindrique est une paroi cylindrique de protection (12) adaptée à protéger un organe de connexion (15) de la cartouche (3) disposé à une première extrémité longitudinale de cette dernière (3) et permettant la connexion de la cartouche (3) à un réseau de conduites (8) adapté à canaliser le réducteur.

7. Système de fixation selon la revendication 6, **caractérisé en ce que** le système de maintien comprend, d'une part, une seconde paroi (16) de forme cylindrique portée par la cartouche (3) à une deuxième extrémité longitudinale opposée à la première extrémité longitudinale, et, d'autre part, un doigt d'appui (17) porté par le support (5), orienté dans le sens de l'axe (10) de rotation de la cartouche (3) en position de maintien, et adapté à supporter la seconde paroi (16) de la cartouche (3) quand celle-ci est en position de maintien.

8. Système de fixation selon l'une des revendications 5 à 7 dépendantes de l'une des revendications 2 à 4, **caractérisé en ce que** le système de verrouillage comprend d'une part, un orifice (18) réalisé dans une surface (12) cylindrique de la cartouche (3), et, d'autre part, un ergot d'immobilisation (9) saillant du capot (6) et adapté à pénétrer dans l'orifice (18) quand la cartouche (3) est dans sa position angulaire de stabilisation.

9. Système de fixation selon la revendication 8 dépendante de l'une des revendications 6 et 7, **caractérisé en ce que** l'orifice (18) est réalisé dans la surface cylindrique de protection (12).

10. Système de fixation selon l'une des revendications 5 à 9 dépendantes de l'une des revendications 3 et 4, **caractérisé en ce que** le capot (6) comprend une surface de contact (20) adaptée, quand le capot (6) est rapproché du support (5) pour y être fixé, à venir en contact contre la cartouche (3) et à l'entraîner de sa position de mise en place à sa position d'usage.

## Patentansprüche

1. System zur Befestigung einer Reduziererkartusche (3), wobei der Reduzierer in Form eines Feststoffsalzes gelagert ist, an einem Halter (5), der dazu angepasst ist, an einem Kraftfahrzeug befestigt zu werden, **dadurch gekennzeichnet, dass** es ein Haltesystem umfasst, das derart ausgelegt ist, dass es eine Halteposition der Kartusche (3) definiert, in der diese Letztere an einer Haltestelle liegt, und die Kartusche (3) in dieser Position nach Drehung dieser Letzteren um sich selbst um ihre Längsachse von einer Winkelposition zum Anbringen, in der das Haltesystem das Annähern der Kartusche (3) mit einer Bodenwand (9) des Halters (5), bis zu der Halteposition erlaubt, bis zu einer Stabilisierungswinkelposition, in der das Haltesystem das Beabstanden der Kartusche (3) von der Bodenwand (9) verhindert, zu stabilisieren.

2. Befestigungssystem nach Anspruch 1, **dadurch gekennzeichnet, dass** es ein Verriegelungssystem umfasst, das angepasst ist, um die Kartusche (3) in ihrer Stabilisierungswinkelposition durch die Befestigung an dem Halter (5) einer Haube (6) stillzustellen, die angepasst ist, um die Kartusche (3) in einer Aufnahme, die von dem Halter (5) und der Haube (6) abgegrenzt wird, einzuschließen.

3. Befestigungssystem nach einem der Ansprüche 1 und 2, **dadurch gekennzeichnet, dass** es ein System zum Ablösen umfasst, das angepasst ist, um die Kartusche (3) in Stabilisierungswinkelposition von ihrer Halteposition zu einer Gebrauchsposition, in der die Kartusche (3) der Bodenwand (9) näher ist als sie es in der Halteposition ist, zu verlagern.

4. Befestigungssystem nach Anspruch 3, **dadurch gekennzeichnet, dass** die Kartusche (3) in Gebrauchsposition mit der Bodenwand (9) in Berührung ist.

5. Befestigungssystem nach einem der Ansprüche 1 bis 4, **dadurch gekennzeichnet, dass** das Haltesystem einerseits eine Nute (11) umfasst, die in einer Wand (12) mit zylindrischer Form, die von der Kartusche (3) getragen wird, hergestellt ist, und, andererseits, einen Dorn (13), der in die Richtung der Rotationsachse (10) der Kartusche (3) in Halteposition vorsteht, eines Arms (14), der von dem Halter (5) getragen wird, wobei die Nute (11) in die vorstehende Richtung des Dorns (13) eine Durchgangshöhe hat, die das Durchgehen des Arms (14) und des Dorns (13) in einem Winkelsektor erlaubt, der der Winkelposition des Anbringens der Kartusche (3) entspricht, und nur die Passage des Arms (14) in den anderen Winkelsektoren erlaubt.

6. Befestigungssystem nach Anspruch 5, **dadurch gekennzeichnet, dass** die Wand (12) mit zylindrischer Form eine zylindrische Schutzwand (12) ist, die angepasst ist, um ein Verbindungsorgan (15) der Kartusche (3), das an einem ersten Längsende dieser Letzteren (3) angeordnet ist, zu schützen und das Verbinden der Kartusche (3) mit einem Netz von Leitungen (8) zu erlauben, das angepasst ist, um den Reduzierer zu kanalisieren.

7. Befestigungssystem nach Anspruch 6, **dadurch gekennzeichnet, dass** das Haltesystem einerseits eine zweite Wand (16) mit zylindrischer Form umfasst, die von der Kartusche (3) an einem zweiten Längsende, das dem ersten Längsende entgegengesetzt ist, getragen wird, und, andererseits, einen Auflagefinger (17), der von dem Halter (5) getragen wird, der in die Richtung der Rotationsachse (10) der Kartusche (3) in Halteposition ausgerichtet und angepasst ist, um die zweite Wand (16) der Kartusche (3) zu stützen, wenn sie sich in Halteposition befindet.

8. Befestigungssystem nach einem der Ansprüche 5 bis 7, abhängig von einem der Ansprüche 2 bis 4, **dadurch gekennzeichnet, dass** das Verriegelungssystem einerseits eine Öffnung (18) umfasst, die in einer zylindrischen Oberfläche (12) der Kartusche (3) hergestellt ist, und, andererseits, einen Stillstellungsdorn (9), der von der Haube (6) vorsteht und angepasst ist, um in die Öffnung (18) einzudringen, wenn die Kartusche (3) in ihrer Stabilisierungswinkelposition ist.

9. Befestigungssystem nach Anspruch 8, abhängig von einem der Ansprüche 6 und 7, **dadurch gekennzeichnet, dass** die Öffnung (18) in der zylindrischen Schutzoberfläche (12) hergestellt ist.

10. Befestigungssystem nach einem der Ansprüche 5 bis 9, abhängig von einem der Ansprüche 3 und 4, **dadurch gekennzeichnet, dass** die Haube (6) eine Berührungsoberfläche (20) umfasst, die angepasst ist, wenn die Haube (6) dem Halter (5) angenähert wird, um daran befestigt zu werden, gegen die Kartusche (3) in Berührung zu kommen und sie von ihrer Anbringungsposition zu ihrer Gebrauchsposition mitzunehmen.

## Claims

1. A system for attaching a reducer cartridge (3), the reducer being stored in the form of a solid salt, to a holder (5) suitable for being attached to a motor vehicle, **characterized in that** it includes a holding system configured such as to define a position for holding the cartridge (3), wherein the latter is situated at a holding location, and to stabilize the cartridge (3) in this position after rotation of the latter on itself about its longitudinal axis from an angular positioning position, in which the holding system enables the cartridge (3) to be moved closer to a bottom wall (9) of the holder (5) into the holding position, into an angular stabilizing position in which the holding system prevents the cartridge (3) from being moved away from the bottom wall (9).

2. The system for attaching according to Claim 1, **characterized in that** it includes a locking system suitable to immobilize the cartridge (3) in its angular stabilizing position by the attaching to the holder (5) of a cover (6) which is suitable to enclose the cartridge (3) in a housing delimited by the holder (5) and the cover (6).

3. The system for attaching according to one of Claims 1 and 2, **characterized in that** it includes a detaching system suitable to move the cartridge (3) in angular stabilizing position from its holding position to a position of use in which the cartridge (3) is closer to the bottom wall (9) than it is in the holding position.

4. The system for attaching according to Claim 3, **characterized in that** in the position of use, the cartridge (3) is in contact with the bottom wall (9).

5. The system for attaching according to one of Claims 1 to 4, **characterized in that** the holding system includes, on the one hand, a groove (11) formed in a wall (12) of cylindrical shape carried by the cartridge (3), and, on the other hand, a projecting lug (13), in the direction of the rotation axis (10) of the cartridge (3) in the holding position, of an arm (14) which is carried by the holder (5), the groove (11) having, in the projecting direction of the lug (13), a passage height permitting the passage of the arm (14) and of the lug (13) in an angular sector corresponding to the angular positioning position of the cartridge (3) and only permitting the passage of the arm (14) in the other angular sectors.

6. The system for attaching according to Claim 5, **characterized in that** the wall (12) of cylindrical shape is a cylindrical protective wall (12), suitable to protect a connection member (15) of the cartridge (3) disposed at a first longitudinal end of the latter (3) and permitting the connection of the cartridge (3) to a network of ducts (8) suitable to channel the reducer.

7. The system for attaching according to Claim 6, **characterized in that** the holding system includes, on the one hand, a second wall (16) of cylindrical shape carried by the cartridge (3) at a second longitudinal end, opposed to the first longitudinal end, and, on the other hand, a support finger (17) carried by the holder (5), oriented in the direction of the rotation axis (10) of the cartridge (3) in the holding position, and suitable to support the second wall (16) of the cartridge (3) when the latter is in the holding position.

8. The system for attaching according to one of Claims 5 to 7 dependent on one of Claims 2 to 4, **characterized in that** the locking system includes on the one hand an orifice (18) formed in a cylindrical surface (12) of the cartridge (3), and, on the other hand, an immobilisation lug (9) projecting from the cover (6) and suitable to penetrate into the orifice (18) when the cartridge (3) is in its angular stabilizing position.

9. The system for attaching according to Claim 8 dependent on one of Claims 6 and 7, **characterized in that** the orifice (18) is formed in the cylindrical protective surface (12).

10. The system for attaching according to one of Claims 5 to 9 dependent on one of Claims 3 and 4, **characterized in that** the cover (6) includes a contact surface (20) suitable, when the cover (6) is moved closer to the holder (5) to be attached there, to come in contact against the cartridge (3) and to drive it from its positioning position to its position of use.
